# FASCICULE DE BREVET EUROPEEN

(11) **EP 0 299 848 B1**
(45) Date de publication et mention de la délivrance du brevet: **27.10.1993**
(21) Numéro de dépôt: 88401754.2
(22) Date de dépôt: 05.07.1988
(51) Int. Cl.: G01S 1/24

(54) **Procédé de radiolocalisation d'un véhicule porteur d'un dispositif récepteur, par mesure des différences de temps de réception de signaux de radiofréquence et dispositif récepteur pour la mise en oeuvre de ce procédé**
Verfahren zur Radio-Ortung eines Fahrzeuges, versehen mit einem Empfänger, durch Messung von Empfangszeitdifferenzen der Radiosignale und Gerät dafür
Method of radiolocation of a vehicle carrying a receiver, by measuring reception time differences of RF signals and apparatus therefor

(30) Priorité: 06.07.1987 FR 8709556
(43) Date de publication de la demande: 18.01.1989
(73) Titulaire: MLR ELECTRONIQUE, F-44330 Vallet (FR)
(72) Inventeur: Lamiraux, Christian Jean, F-44230 Saint Sebastien Sur Loire (FR)
(74) Mandataire: Berger, Helmut

(56) Documents cités:
- EP-A- 0 082 750
- US-A- 3 947 849
- UNDER SEA TECHNOLOGY, vol. 12, no. 4, avril 1971, pages 16-19, Arlington, US; A.W. MARCHAL: "Loran-C in the rho-rho mode"
- POSITION LOCATION AND NAVIGATION SYMPOSIUM, décembre 1982, pages 333-338, IEEE, Atlantic City, N.J., US; A.W. MARCHAL et al.: "The oni-7000 airborne loran-C system"
- PROCEEDINGS NAT. MARINE MEET. OF INST. NAVIGATION, octobre 1975, pages 81-86, Cockeysville Maryland, US; B. BRENIN: "Signal processing in Sperry Loran-D"

## Description

L'invention concerne un procédé de radiolocalisation d'un véhicule porteur d'un dispositif récepteur et un dispositif récepteur pour la mise en oeuvre de ce procédé, ou type décrit dons les revendications respectivement 1 et 4.

Un Procédé et dispositif de ce type sont décrits dans l'antériorité "Proceedings Nat. Marine Meet. of Inst. Navigation, Octobre 1975, page 81-86 B. Bretin "Signal processing in Sperry LORAN-D".

Mais, ce procédé et dispositif présentent l'inconvénient qu'ils ne permettent pis d'établir des coordonnés de position géographique en mettant en relation les signaux en provenance des deux groupes différents. En effet, il s'agit d'un récepteur qui est seulement adapté pour acquérir les signaux en provenance des deux groupes ou chaînes de périodes différents et pour exploiter séparement les signaux en provenance de chacun de ces groupes.

Or, pour améliorer la précision de la radiolocalisation dans les zones limites placées à la jonction de deux chaînes du type LORAN C se faisant suite le long d'une côte, il serait intéressant de pouvoir établir les coordonnés de la position du véhicule en exploitant simultanement les signaux en provenance de deux stations faisant partie chacune d'une des deux chaînes.

La présente invention a par conséquent pour but de proposer un procédé et un dispositif qui permettent l'établissment du lieu géographique du récepteur en exploitant les signaux en provenance des deux stations appartenant à des groupes de station ayant des périodes de temps différents.

Pour résoudre ce problème, le procédé et le dispositif récepteur pour ce mise en oeuvre comportent les caractéristiques qui sont énoncées dans les parties caractérisantes des revendications 1 et 4.

Le procédé et le dispositif récepteur selon l'invention ne découlent pas de façon évidente du document sous-mentionné "Signal processing in Sperry LORAN-D" dans la mesure ou ce document ne divulge pas ni ne suggère une quelconque mise en relation des signaux de périodes différentes ce qui constituent pourtant la condition capitale pour l'établissement d'une coordonné hyperbolique à partir de deux signaux en provenance des groupes différents. Un procédé et un dispositif selon la revendication 1 et 4 ne s'obtiennent également pas en combinant le document précité avec le brevet US N^{o} 3 947 849. En effet, ce dernier a pour objet un récepteur qui n'est pas adapté pour recevoir des signaux des deux groupes différents dans la mesure ou il fait état de l'utilisation d'un compteur synchrono préinitialisable qui ne peut pas être modifiés à tout instant par une unité de calcul en fonction du résultat des calculs éffectués par cette unité.

D'autres caractéristiques avantageuses de l'invention sont décrits dans des revendications dépendantes.

L'invention sera mieux comprise, et d'autres buts, caractéristiques, détails et avantages de celle-ci apparaîtront plus clairement au cours de la description explicative qui va suivre faite en référence aux figures données uniquement à titre d'exemple et illustrant un mode de réalisation do l'invention.
La figure 1 montre le dispositif récepteur selon l'invention sous forme d'un schéma-bloc de principe, et
Les figures 2 et 3 montrent un schéma électrique concret de ce dispositif récepteur.

On décrire ci-après le procédé et le dispositif émetteur selon l'invention dans leur application à un système comprenant des chaînes LORAN C. Une chaîne LORAN C est un groupe de deux à six stations d'émetteur contenant une station formant émetteur maître et des stations formant des émetteurs esclaves asservis à l'émetteur maître. Ce dernier émet une série de huit impulsions pendant une période comprise entre 49 et 100 millisecondes qui caractérise la chaîne. Cette période d'émission est par exemple multiple de 100 microsecondes. L'intervalle entre deux fronts avant d'impulsions émises est égal à une milliseconde. Les émetteurs esclaves de la chaîne émettent dans la période caractéristique de la chaîne chacun un groupe de huit impulsions rapprochées ayant un retard déterminé par rapport à la série d'impulsions émises par l'émetteur maître, ce qui permet à un dispositif récepteur de reconnaître chaque esclave par sa position grossière dans la période. Les huit impulsions émises par le maître ont un code de phase qui permet de reconnaître le maître parmi tous les esclaves qui ont un code de phase commun, différent des maîtres. Les périodes de répétition sont divisées en deux groupes A et B formant une séquence d'émission de durée égale à deux périodes de répétition, chaque groupe étant reconnaissable par des codes de phase différents établis pour le maître et pour les esclaves. Les séquences d'émission reconnaissables sont de ce fait toutes multiples de 200 microsecondes.

Les maîtres pilotés par des horloges de haute stabilité sont en outre synchrones du temps universel avec une précision énoncée de plus/moins 5 microsecondes.

Le dispositif récepteur selon la présente invention est conçu aussi bien pour effectuer la mesure des différences de temps de réception de deux signaux émis par deux stations maîtres comme des signaux en provenance de deux stations esclaves de chaînes différentes, les retards des esclaves étant connus. La mesure a comme précision celle définie par la précision de synchronisation des émetteurs maîtres sur le temps universel et comme plus grand espace de temps mesurable, appelé "modulo", qui constitue le plus grand commun diviseur des deux séquences d'émission, au moins 200 microsecondes. Du fait de la grande stabilité des oscillateurs pilotes des stations maîtres, l'imprécision de plus/moins 5 microsecondes peut être compensée périodiquement par étalonnage du récepteur en un point fixe connu. A titre d'exemple, l'instabilité définie à 2 x 10⁻¹³ pour les stations émettrices permet de limiter la dérive de position à 10 mètres par tranche de 24 heures. Une fois étalonnée, la capacité du récepteur d'établir une mesure "modulo" de 200 microsecondes ne nécessite qu'une estime de 30 kilomètres.

Parmi les applications intéressantes de l'invention figure la radionavigation sur aéronef et d'une manière générale sur tous les mobiles partants d'une position géographique connue pour un trajet limité dans le temps : 5 jours pour un dérivé possible de 50 mètres.

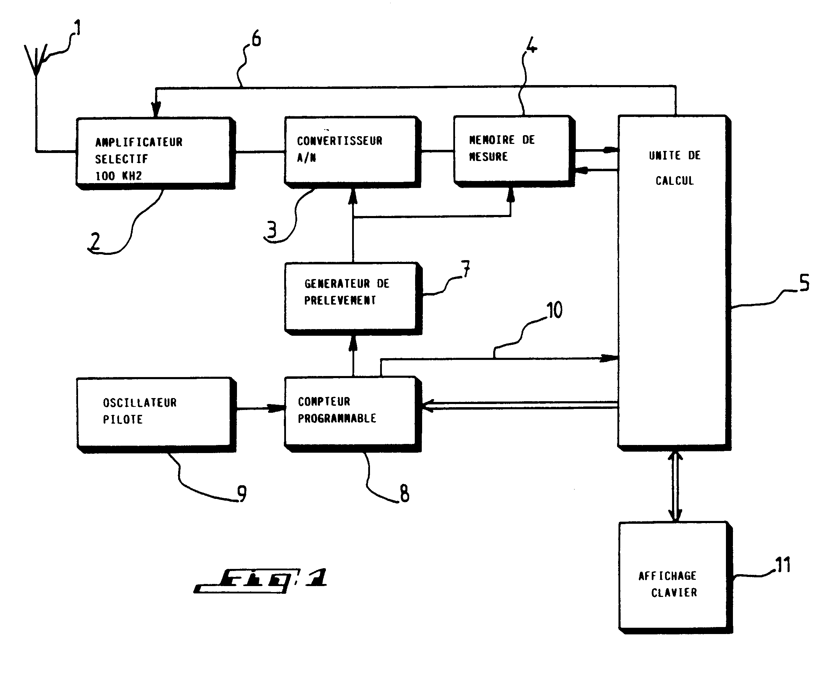

Un dispositif récepteur selon l'invention tel qu'il est représenté à titre d'exemple sur la figure 1 comprend un seul canal de réception qui comporte, montés en série, une antenne 1, un amplificateur sélectif 2 centré sur la fréquence des signaux LORAN C de 100 kilohertz, un convertisseur analogique-numérique 3, une mémoire de mesure 4 et une unité de calcul 5 susceptible de dialogues avec la mémoire de mesure 4. Le gain de l'amplificateur est réglable, par exemple en quatre pas de 12 décibels, par l'unité de calcul, par l'intermédiaire d'un conducteur 6, de manière à fournir au convertisseur 3 un signal de niveau adapté à la dynamique d'entrée.

Le canal comporte en outre un générateur de prélèvement qui fournit au convertisseur 3 un signal d'échantillonnage formé de 16 impulsions successives espacées de 2,5 microsecondes, de manière à effectuer la mesure d'un signal LORAN C sur une durée de quatre alternances ce qui permet d'identifier le front montant de chaque impulsion LORAN C selon une méthode d'échantillonnage bien connue. Le générateur 7 est également relié à la mémoire de mesure 4. Le générateur 7 produit ses signaux de prélèvement sous la commande d'un compteur programmable 8, qui établit un ordre de commande de prélèvement selon un cycle réglable par l'unité de calcul 5 entre une milliseconde et deux millisecondes par pas de 0,1 microseconde. Le compteur programmable 8 auquel est associé un oscillateur pilote 9 transmet à l'unité de calcul 5, par l'intermédiaire d'un conducteur 10 l'information de fin de cycle pour que l'unité 5 effectue le comptage du temps et prélève les données de mesure mémorisées dans la mémoire de mesure 4 formant mémoire tampon du convertisseur 3, sous l'effet du générateur de prélèvement 7. On constate encore qu'un dispositif de clavier et d'affichage 11 est associé à l'unité de calcul 5. Le clavier permet à l'utilisateur de déterminer les chaînes LORAN C à poursuivre par l'inscription de la ou des périodes de répétition et des postes émetteurs définis par leur temps de retard arrondis dans leur période. Le clavier permet en outre l'introduction d'une position géographique d'estime qui sert à l'établissement des différences de temps attendues selon un programme de calcul connu. L'affichage fournit principalement l'information de position géographique, les différences de temps mesurées, les niveaux de réception de chacun des signaux et les informations d'alarme de perte de signal.

On décrira ci-après le fonctionnement du dispositif récepteur selon l'invention, qui vient d'être décrit dans son mode d'utilisation pour la poursuite simultanée de deux périodes de respectivement 79, 70 millisecondes et de 89, 40 millisecondes, qui sont spécifiques des chaînes Norvège et de France. Les deux périodes sont appelées par la suite GRI 1 et 2 (Groupe Répétition Intervalle).

Pour la première période (GRI 1), considérée comme prioritaire dans l'exemple, l'unité de calcul programme le compteur à 1 milliseconde. Au bout de 78 relevés de fin de cycle, reçus par l'intermédiaire du conducteur 10, l'unité de calcul 5 programme le compteur à 1,7 milliseconde. Lorsque l'unité relève la fin de ce cycle de 1,7 milliseconde, le compteur est reprogrammé aux cycles de 1 milliseconde. La séquence décrite permet de définir la période de 79, 70 millisecondes.

Cette période produite localement dans le récepteur et correspondant à la période du premier groupe ou chaîne LORAN C est utilisé pour servir de référence pour la mesure des différences de temps de propagation des signaux radioélectriques en provenance de deux stations émetteurs de cette chaîne qui peuvent être l'émetteur maître et un émetteur esclave, comme dans l'exemple qui sera décrit ci-après, ou deux émetteurs esclaves. Pour que la séquence ou période locale puisse servir de référence, on l'a fait glisser dans l'espace de temps de la période de 79, 70 millisecondes de la chaîne, de façon à placer la réception du maître en début de la séquence, la programmation du compteur programmable au cycle de 1,7 milliseconde étant remplacé périodiquement par 1,8 milliseconde jusqu'à obtenir la coïncidence désirée à 100 microsecondes près. Pour savoir s'il y a coïncidence ou non, le compteur programmable 8 déclenche la fin du cycle de 1,8 milliseconde le dispositif échantillonneur et le prélèvement 7 qui fournit le signal formé de 16 impulsions successives espacées de 2,5 microsecondes comme décrit plus haut, pour identifier le front montant de chaque impulsion du signal maître reçu. Ensuite on agit identiquement sur les poids faibles du compteur qui présente un pas de 0,1 microseconde, pour parfaire la synchronisation du maître.

Pour l'acquisition des signaux en provenance de l'émetteur esclave du même GRI 1, l'unité de calcul est programmée pour effectuer le processus de chargement du compteur programmable 8 suivant. En supposant que le front avant de la première des huit impulsions du signal esclave est attendu à la position correspondante à l'intervalle de 14,3 millisecondes compté à partir du signal maître dans la séquence de GRI 1, l'unité de calcul charge le compteur programmable 8 à la position 13 de la séquence pour qu'il effectue un cycle de 1,3 milliseconde. A la fin de ce cycle constaté par décomptage jusqu'à 0, le compteur 8 ordonne au dispositif échantillonneur et de prélèvement 7 de transmettre le signal échantillonnage de 16 impulsions au convertisseur 3 et l'unité de calcul charge le compteur 8 à une milliseconde pour huit temps correspondant aux huit impulsions de la série esclave. Puis l'unité de calcul 5 charge le compteur pour qu'il effectue un cycle de 1,7 milliseconde, 1,7 constituant le nombre complémentaire du décalage de chargement avant de 1,3 milliseconde. Cette mesure permet de revenir dans la séquence de GRI 1 à des positions de nombre entier pour conserver la séquence totale de 79, 70 millisecondes, qui est comptée de la manière indiquée plus haut. En effet, après le cycle de 1,7 milliseconde le compteur est à nouveau chargé à effectuer des cycles de 1 milliseconde jusqu'à la position 78 ou il sera amené à effectuer un cycle de 1,7 milliseconde. Si la position présumée de la réception du signal esclave, c'est-à-dire de la série des impulsions est en avant ou en retard de l'instant de temps de la réception réelle du signal, l'unité de calcul essaye pendant les séquences suivantes des positions présumées décalées en conséquence jusqu'à ce qu'il y ait coïncidence entre le signal reçu et la position de réception présumée dans la séquence de 79, 70 millisecondes produite dans le récepteur.

L'acquisition des signaux en provenance de la seconde chaîne ayant une période de 89,40 millisecondes s'effectue dans les espaces laissés disponibles par l'acquisition des signaux émis par les deux stations du premier groupe, pendant la période de 79,70 millisecondes de celui-ci. Cette opération sera décrite plus loin. Pour l'acquisition et la mesure des signaux du deuxième groupe l'unité de calcul 5 est programmée pour compter à chaque début de la séquence du premier groupe, c'est-à-dire à l'instant de la réception du front avant de la première impulsion de la série des impulsions maître le retard de la réception du signal en provenance du maître du deuxième groupe, la différence des périodes des deux GRI étant de 9,70 millisecondes (99,40 - 79,70), et détermine par comptage l'emplacement présumé du maître du deuxième groupe dans la séquence locale reproduite dans le récepteur, et celui du signal esclave du GRI 2.

Le calage fin sur les deux stations de la seconde chaîne ou du second groupe s'effectue de la manière décrite au sujet de l'esclave du premier groupe, en programmant le compteur dans l'espace à deux millisecondes qui précède la position présumée de la première impulsion de la série de huit impulsions au cycle approprié, en plaçant ensuite le compteur programmable 8 à une milliseconde pour mesurer les huit impulsions à traiter et en replaçant le compteur au nombre du complément pour revenir à une position entière dans la séquence du GRI 1.

Cependant l'ordre d'acquisition et de mesure n'est déclenché que lorsque le compteur 8 n'est pas occupé par la poursuite des signaux en provenance de la première chaîne. A cette fin l'unité de calcul est programmée selon un logiciel de déclenchement d'une séquence de huit impulsions sur les signaux de la seconde chaîne, qui est valable pour les deux stations à poursuivre de cette deuxième chaîne. Selon ce logiciel, au top de comptage interne de l'unité de calcul qui détermine l'instant d'adressage du compteur programmable 8 pour la première des huit impulsions du maître de la deuxième chaîne par exemple, on vérifie si une station de la première chaîne est en cours de prélèvement. Si cela est le cas il n'y a pas d'adressage du compteur en vue d'un prélèvement sur le signal du maître. S'il n'y a pas de prélèvement sur une station de la première chaîne on vérifie encore si l'espace de temps avant l'arrivée du signal de la prochaine station à prendre en compte de la première chaîne est supérieur à une durée prédéterminée, par exemple à 9 millisecondes. Si la réponse est négative il n'y a pas d'adressage du compteur en vue d'un prélèvement sur le signal du maître de la deuxième chaîne. Par contre, si l'espace de temps est supérieur à la durée prédéterminée, l'unité de calcul adresse le compteur programmable 8 pour un prélèvement sur le maître de la deuxième chaîne. Le même processus de vérification a lieu pour un prélèvement sur un signal esclave appartenant au second GRI, c'est-à-dire en provenance de la deuxième chaîne.

Concernant l'espace de temps disponible pour le prélèvement sur les signaux du GRI 2, on constate que le temps de non occupation du récepteur selon l'invention est égal à 79,70- 18 = 61,7 millisecondes, soit 77% du temps total, les 18 millisecondes constituant la durée totale des deux séries de 8 impulsions du maître et de l'esclave de la première chaîne. C'est donc dans cet espace de temps de 61,7 millisecondes que l'on pourrait effectuer les prélèvements sur le GRI 2 si le GRI 1 le permet. En raison de l'espace de temps prédéterminé de 9 millisecondes de sécurité en amont d'un prélèvement sur un signal du GRI, le temps réellement disponible pour le GRI 2 vaut en moyenne 61,7 - 18 - 43,7 millisecondes, soit dans cet exemple 55% du temps total et dans le temps général environ 50% ce qui est satisfaisant pour assurer la qualité de traitement du signal, l'effet d'un multiplexage 1 sur 2 (50%) entraînant une dégradation dans le rapport signal égal à 3 db suffisamment faible pour être négligé par rapport aux autres effets d'imprécision.

Concernant la mesure de la différence de temps par exemple entre les deux signaux maîtres des deux groupes ou chaînes LORAN C, cette mesure s'effectue en retenant la valeur prévue du retard du deuxième signal maître au moment de l'adressage du compteur programmable 8 dans le but du prélèvement sur la première impulsion de la série d'impulsions du signal maître. Le prélèvement s'effectue lors du passage de la période B vers la période A du premier groupe et tient compte de l'état de la période A ou B de la deuxième chaîne, en ajoutant la valeur de la période du GRI 2, c'est-à-dire de la deuxième chaîne, si l'état est B. Les périodes A et B successives d'une séquence totale de chaque chaîne sont identifiées en comparant les codes de phase des groupes de huit impulsions au code modèle établi pour les deux périodes A et B. Pour chaque valeur relevée, on retient le reste de la division par 200 microsecondes, qui représente une donnée stable dépendant de la position du récepteur.

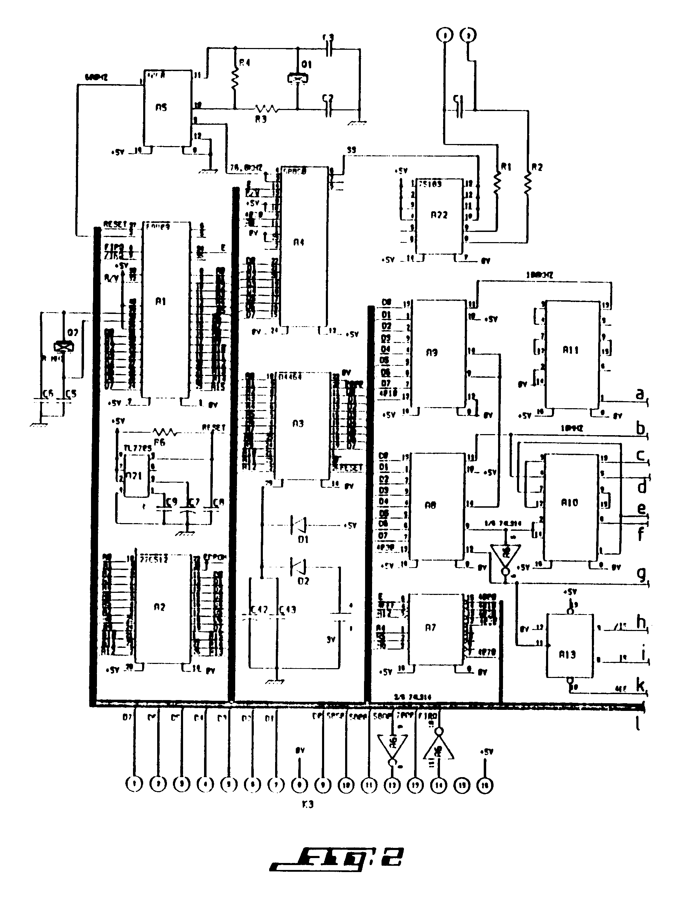

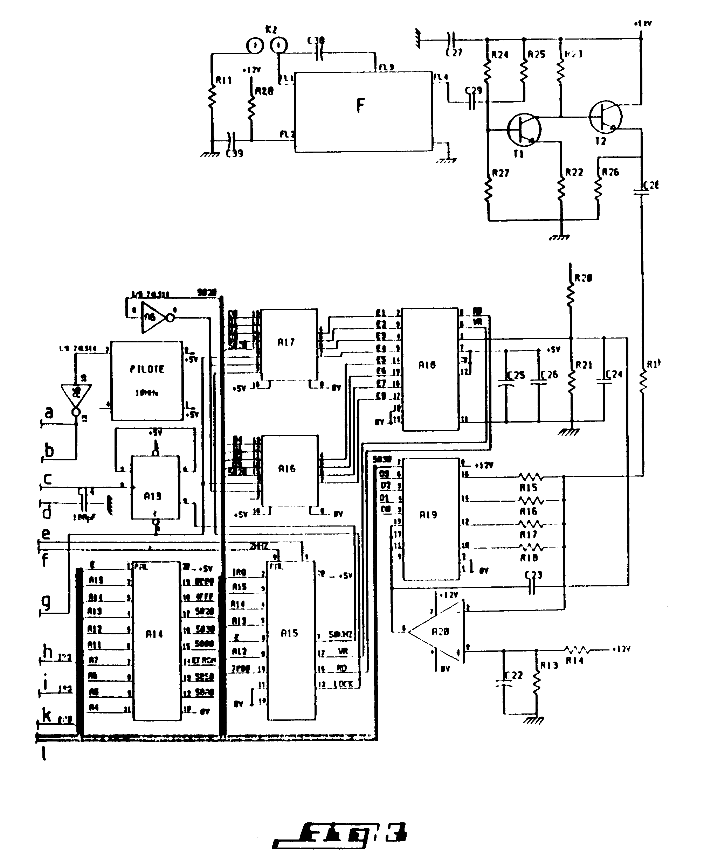

En se reportant aux figures 2 et 3 on décrira ci-après brièvement un mode de réalisation préféré du dispositif de mise en oeuvre concret du procédé qui vient d'être décrit en se référant au schéma de principe de la figure 1. Les figures 2 et 3 représentent en deux parties ce dispositif, la liaison électrique des deux parties se faisant par des conducteurs qui sont désignés aux figures 2 et 3 par les mêmes symboles de référence, en l'occurence par des lettres a à l.

Sur ce schéma, l'unité de calcul 5 de la figure 1 est essentiellement formée par des ensembles classiques constituant le montage d'un micro-processeur. Dans ce montage A1, A2 et A3 constituent respectivement le micro-processeur, la mémoire programme et la mémoire vive. A4 est un circuit d'interface série tandis qu'A7 et A14 constituent le circuit de décodage d'adresse. Le circuit A21 fournit le signal de départ (RS) qui suit la mise sous tension du montage. La référence K3 désigne le connecteur qui interface le circuit clavier et affichage 11 de la figure 1. Bien entendu le montage du micro-processeur est complété par des circuits classiques associés, tels que des montages oscillateurs à quartz.

Sur ce schéma représenté aux figures 2 et 3, le signal d'antenne est reçu par le connecteur K2. Il est appliqué à un filtre F à huit cellules du type LC, accordé pour laisser passer le signal LORAN C. Les transistors T1, T2 effectuent une amplification. Le signal parvient ensuite à l'amplificateur A20 qui fournit le signal au convertisseur du circuit A12 constituant le convertisseur analogique/numérique 3 de la figure 1. Le gain de l'amplificateur A20 est réglé par le montage à commutateur du circuit A19 qui détermine la valeur de la résistance de contre-réaction, à savoir R15, R16, R17 ou R18, selon l'état de commande issue du micro-processeur par les données D0 à D3, et l'adresse 5030. Le jeu de résistances permet de faire varier le gain de l'amplificateur par pas de 13 décibels. Le circuit d'entrée jusqu'à l'amplificateur 20 matérialise l'amplificateur sélectif indiqué en 2 à la figure 1.

Le circuit convertisseur A18 reçoit des ordres de conversion par les entrées RD et WR. Comme cela a été décrit plus haut, seize ordres successifs, espacés de 2,5 us sont ainsi reçus et les résultats des conversions de 8 bits chacun sont rangés en série dans les circuits A16 et A17 qui sont des registres mémoire du type FIFO. Ces circuits A16 et A17 matérialisent la mémoire de mesure 4 de la figure 1. Les données sont ensuite prélevées par le circuit micro-processeur, par l'excitation de l'adresse 5020, comme cela ressort du schéma. Par 9 on désigne sur ce schéma, comme à la figure 1, le circuit formant l'oscillateur pilote. Cet oscillateur fournit un signal de 10 MHz, qui est appliqué à un circuit formant compteur diviseur A11. Celui-ci engendre un signal de 100 KHz, et l'applique au compteur programmable A9 à 8 bits. Ce compteur 9 est chargé préalablement par le bus, sous l'action de l'adresse 4010, les bus étant indiqués par des traits larges. La sortie 9 du compteur est excitée lorsque celui-ci atteint sa valeur maximum. Le signal appliqué à la borne 14 a pour effet de recharger le compteur à la valeur prédéterminée dans la mémoire tampon du compteur A9. Le signal de la borne 9 compte ainsi des nombres entiers de périodes de 100 KHz, qui sont définis par le micro-processeur. Le signal à la borne 9 du compteur A9 est appliqué à un circuit compteur programmable A8 qui compte un nombre entier de périodes du signal de 10 MHz, qui est prédéterminé par le micro-processeur sous l'action de l'adresse 4030.

Le signal présent à la borne de sortie 9 du compteur A8 déclenche le compteur A10, qui associé au circuit de décodage A15, engendre les 16 ordres de prélèvement pour le convertiseur analogique/numérique A18 pour le remplissage des mémoires FIFO A16 et A17. Le compteur A8 est bloqué après chaque comptage par le signal de fin de comptage, appliqué à la borne d'entrée 12. Le signal est également appliqué au circuit A13 qui constitue une bascule et engendre le signal d'interruption IRQ. Ce signal est appliqué au micro-processeur A1. Sur cette interruption, ce dernier déroule notamment le programme de prélèvement des mesures placées dans la mémoire FIFO, comme cela a été décrit de façon détaillée plus haut.

Il est à noter que seulement les circuits du schéma selon les figures 2 et 3, qui sont les plus essentielles pour comprendre la matérialisation concrète du schéma-bloc selon la figure 1, ont été décrites, les autres circuits représentés constituant des circuits accessoires conventionnels, dont la présence et la structure sont évidentes pour l'homme du métier.

## Revendications

1. Procédé de radiolocalisation d'un véhicule porteur d'un dispositif récepteur, par mesure des différences de temps de réception de signaux de radiofréquence émis par des stations émettrices géographiquement éloignées de deux groupes de station, chacun desdits groupes comprenant une station émettrice formant émetteur maître et au moins une station formant émetteur esclave asservie à l'émetteur maître, chaque station d'un groupe émettant une série d'impulsions électriques rapprochées, décalée dans le temps d'une façon prédéterminée, des séries d'impulsions émises par les autres stations de ce groupe, pendant une période de temps prédéterminé et spécifique de ce groupe et différente de la période de temps de l'autre groupe, ces périodes étant divisées en deux groupes A et B Formant une séquence d'émission, procédé selon lequel on effectue dans un seul canal de réception l'acquisition et la mesure des signaux émis par des stations émettrices des deux groupes, caractérisé en ce que l'on produit dans la récepteur la période spécifique de l'un des deux groupes, synchronise la période localement produite avec les signaux de la période spécifique reçus, détermine l'emplacement de chaque signal utilisé pour la radiolocalisation, en provenance de stations des deux groupes dans la période localement produite en effectuant les acquisitions et mesures des signaux des stations émettrices du second groupe pendant l'intervalle de temps laissé disponible dans cette période par l'acquisition et la mesure des signaux en provenance du premier groupe, et pour la radiolocalisation par mesure de la différence de temps de réception de deux signaux émis par des stations de deux groupes différents, on divise la différence de temps mesuré par le plus grand diviseur commun des séquences d'emission constituées par les deux périodes spécifiques des deux groupes et retient le reste de la division comme valeur indicative de la position géographique à établir.

2. Procédé selon la revendication 1, caractérisé en ce que, pour l'acquisition et la mesure des signaux du deuxième groupe, on compte à chaque réception du front avant de la première impulsion de la série des impulsions maître du premier groupe le retard de la réception du signal en provenance du maître du deuxième groupe et détermine par comptage l'emplacement présumé du maître du deuxième groupe dans la séquence locale reproduite dans le récepteur et celui du signal esclave du deuxième groupe.

3. Procédé selon la revendication 2, caractérisé en ce que, pour établir un lieu de position hyperbolique à partir de signaux de deux stations appartenant chacune à un des deux groupes précités, on commence à utiliser le procédé à un point géographique où la mesure de le différence des phases entre les signaux reçus des deux stations est au maximum approximativement égale à la moitié du tempe égale au plus grand diviseur précité des deux périodes précitées.

4. Dispositif récepteur pour la radiolocalisation d'un véhicule porteur d'un dispostif récepteur, par mesure des différences de temps de réception de signaux de radiofréquence émis par des stations émettrices géographiquement éloignées de deux groupes de station, chacun desdits groupes comprenant une station émettrice formant émetteur maître et au moins une station formant émetteur esclave asservie à l'émetteur maître, chaque station d'un groupe émettant une série d'impulsions électriques rapprochées décalée dans le temps, d'une façon prédéterminée, des séries d'impulsions émises par les autres stations de ce groupe, pendant une période de temps prédéterminée et spécifique de ce groupe et différente de la période de temps de l'autre groupe ces périodes étant divisée en deux groupes A et B formant une séquence d'émission, ledit dispositif récepteur comprenant un seul canal de réception qui comprend un dispositif de prélèvement de données de mesure sur les signaux à mesurer, un dispositif de commande du prélèvement sous l'effet d'une unité de calcul adaptée pour effectuer des calculs à partir des signaux reçus, caractérisé on ce qu'il comprend un compteur programmable (8) pour la commande du dispositif de prélèvement (7) réalisé sou, forme d'un générateur d'impulsions d'échantillonnage, et que l'unité de calcul (5) est programmée, d'une part, pour effecteur le compte des positions présumées des signaux à mesurer en provenance de stations émettrices des deux groupes différents et pour commander le compteur programmable (8), en amenant ce compteur programmable à effectuer constamment et successivement une séquence de cycles de comptage dont la durée est identique à la période spécifique de l'un des groupes de stations émettrices, en synchronisme avec cette période, et à effectuer pendant cette séquence de cycles à des positions de comptage déterminées par l'unité de calcul (5), pendant une durée de temps prédéterminée, un cycle de comptage d'acquisition d'un signal du second des groupes de stations, à acquérir et à utiliser pour la radiolocalisation, et, d'autre part, pour la détermination de coordonnées de radiolocalisation à partir de signaux de deux stations appartenant chacune à un desdits groupes, l'unité de calcul (5) est programmée pour diviser la différence de temps de réception de deux signaux en provenance de dits groupes différents par le plus grand diviseur commun des séquences d'émission constituées par les deux périodes spécifiques des deux groupes et retient le reste de cette division comme valeur indicative de la position géographique à établir.

5. Dispositif récepteur selon la revendication 4, caractérisée en ce que chaque durée d'un cycle d'acquisition correspond à un nombre entier prédéterminé de positions de comptage du compteur programmable (8) de façon qu'à la fin de cette durée de cycle d'acquisition le compteur programmable se trouve à une position de comptage définie de la séquence de comptage de période précitée.

6. Dispositif récepteur selon la revendication 5, caractérisé en ce que l'unité de calcul (5) est programmée pour charger le compteur programmable (8) pendant une durée de cycle de comptage d'acquisition à effectuer un premier cycle dont la durée est égale à l'intervalle de temps entre la position de comptage de départ du compteur programmable et l'instant de réception estimé du signal et un cycle dont la durée est complémentaire audit intervalle pour que la durée totale du temps d'acquisition soit égale au nombre entier précité de positions du compteur programmable.

7. Dispositif récepteur selon la revendication 6, caractérisé en ce que pour l'acquisition et la mesure de signaux en provenance de stations émettrices d'un autre groupe de stations dont la période est différente de celle du premier groupe, l'unité de calcul (5) est programmée pour établir dans le séquencé établie pour le premier groupe, la position présumée correspondant à la réception d'un signal à acquérir et mesurer du deuxième groupe et pour faire varier deux fois de façon définie le cycle du compteur programmable (8) on fonction de la position présumée, à la manière précitée, pour que celui-ci reprenne ces cycles de comptages de séquence à une position définissable par l'unité de calcul, tout en tenant compte du décalage dans le temps des signaux des émissions maîtres des deux groupes, occasionné par les durées de temps différentes des deux périodes.

8. Dispositif récepteur selon l'une des revendications 4 à 7, caractérisé en ce qu'il comprend en outre, en aval d'un amplificateur sélectif d'entrée (2), un convertisseur analogique-numérique (3) sur lequel agit le dispositif générateur de prélèvement (7) et qui est relié à une mémoire de stockage de mesure susceptible de dialoguer avec l'unité de calcul (5).

9. Dispositif récepteur selon l'une des revendications 4 à 8, caractérisé en ce qu'il comprend un dispositif d'affichage et de clavier (11) permettant à un utilisateur d'inscrire la ou les périodes des groupes de stations émettrices et les esclaves définis par leur temps de retard par rapport aux maîtres, arrondies dans leur période, ainsi qu'une position géographique d'estime.

## Claims

1. Method of radiolocation of a vehicle carrying a receiver device, by the measurement of the differences of the times of receiving radiofrequency signals emitted by emitting stations geographically remote from two groups of stations, each one of the said groups comprising one emitting station forming a master emitter and at least one station forming a slave emitter interlocked in follow-up relationship with the master emitter, each station of one group emitting a series of closely spaced electrical impulses, offset in time in a predetermined manner from the series of impulses emitted by the other stations of this group for a predetermined time period specific to this group and different from the time period of the other group, these periods being divided into two groups A and B forming an emission sequence, method according to which one effects in a single receiving channel, the acquisition and the measurement of the signals emitted by emitting stations of both groups, characterized in that one produces in the receiver the specific period of one of the two groups, one synchronizes the locally produced period with the received signals of the specific period, one determines the place of each signal used for the radiolocation and coming from stations of the two groups within the locally produced period by effecting the acquisitions and measurements of the signals from the emitting stations of the second group during the time interval left available in this period by the acquisition and the measurement of the signals coming from the first group and, for the radiolocation through the measurement of the difference of the times of receiving of two signals emitted by stations of two different groups, one divides the measured time difference by the greatest common factor of the emission sequences constituted by both specific periods of the two groups and one retains the remainder of the division as a value indicative of the geographic position to be ascertained.

2. Method according to claim 1, characterized in that for the acquisition and the measurement of the signals from the second group, one counts at each reception of the forward front of the first impulse of the series of the master impulses from the first group, the delay of the reception of the signal coming from the master of the second group and one determines by counting the presumed place of the master of the second group in the local sequence reproduced in the receiver and that of the slave signal from the second group.

3. Method according to claim 2, characterized in that to ascertain the hyperbolic position locus from signals from two stations belonging each one to one of the two aforesaid groups, one begins to use the method at a geographical spot where the measurement of the phase difference between the signals received from both stations is at most approximately equal to one half of the time equal to the aforesaid highest factor of the two aforesaid periods.

4. Receiver device for the radiolocation of a vehicle carrying a receiver device, by measurement of the differences of times of reception of radio frequency signals emitted by geographically remote emitting stations of two groups of stations, each one of the said groups comprising one emitting station forming a master emitter and at least one station forming a slave emitter interlocked in follow-up relationship with the master emitter, each station of one group emitting a series of closely spaced electrical impulses offset in time, in a predetermined manner, from the series of impulses emitted by the other stations of this group during a predetermined time period specific to this group and different from the time period of the other group, these periods being divided into two groups A and B forming an emission sequence, the said receiver device comprising one single receiving channel which comprises a device for taking measurement data from the signals to be measured, a device for the control of the taking under the effect of a computing unit adapted to effect calculations from the received signals, characterized in that it comprises a programmable counter (8) for the control of the taking device (7) provided as a sampling impulse generator and in that the computer unit (5) is programmed on the one hand to effect the counting of the presumed positions of the signals to be measured coming from emitting stations of two different groups and to control the programmable counter (8) by causing this programmable counter to constantly and successively effect a sequence of counting cycles the duration of which is identical with the specific period of one of the groups of emitting stations, in synchronism with this period and to effect during this sequence of cycles at counting positions determined by the computer unit (5) for a predetermined time duration, a cycle of counting of acquisition of a signal from the second one of the groups of stations to be acquired and to be used for the radiolocation and on the other hand for the determination of coordinates of radiolocation from signals from two stations belonging each one to one of the said groups, the computer unit (5) is programmed for dividing the difference of time of reception of two signals coming from the said different groups by the highest common factor of the emission sequences constituted by both specific periods of the two groups and one retains the reminder of this division as a value indicative of the geographical position to be ascertained.

5. Receiver device according to claim 4, characterized in that each duration of an acquisition cycle corresponds to a predetermined whole number of counting positions of the programmable counter (8) so that at the end of this acquisition cycle duration the programmable counter is at a defined counting position of the aforesaid period counting sequence.

6. Receiver device according to claim 5, characterized in that the computer unit (5) is programmed to instruct the programmable counter (8) for an acquisition counting cycle duration to effect a first cycle the duration of which is equal to the time interval between the starting counting position of the programmable counter and the estimated reception moment of the signal and a cycle the duration of which is complementary to the said interval in order that the total acquisition time duration be equal to the aforesaid whole number of positions of the programmable counter.

7. Receiver device according to claim 6, characterized in that for the acquisition and the measurement of signals coming from emitting stations of another group of stations the period of which is different from that of the first group, the computer unit (5) is programmed to ascertain in the sequence established for the first group, the presumed position corresponding to the reception of a signal to be acquired and to be measured from the second group and for varying twice in a defined manner the cycle of the programmable counter (8) as a function of the presumed position, in the aforesaid manner, in order that the latter resumes these cycles of sequence countings at a position definable by the computer unit while taking into account the offset in time of the signals from the master emissions of both groups, caused by different time durations of both periods.

8. Receiver device according to one of claims 4 to 7, characterized in that it further comprises downstream of a selective input amplifier (2), an analogue-digital converter (3) upon which acts the taking generator device (7) and which is connected to a measurement storing memory adapted to dialogue with the computer unit (5).

9. Receiver device according to one of claims 4 to 8, characterized in that it comprises a display and keyboard device (11) allowing a user to record the period(s) of the groups of emitting stations and the slaves defined by their delay time with respect to the masters with their period being approximated as well as an estimated geographical position.

## Patentansprüche

1. Verfahren zur Radio-Ortung eines Fahrzeuges, das eine Empfängervorrichtung trägt, durch Messung der Differenzen der Empfangszeiten von Radio- oder Hochfrequenzsignalen, die von geographisch voneinander entfernten Senderstationen zweier Stationsgruppen ausgesendet werden, wobei jede dieser Gruppen eine einen Hauptsender bildende Senderstation und wenigstens eine einen Nebensender bildende und dem Hauptsender untergeordnete Station besitzt, wobei jede Station einer Gruppe eine Serie von nahe beieinanderliegenden elektrischen Impulsen, die zeitlich in vorbestimmter Weise von den Impulsserien, die von den anderen Stationen dieser Gruppe ausgesendet werden, versetzt ist, während einer vorbestimmten und für diese Gruppe spezifischen und von der Zeitperiode der anderen Gruppe unterschiedlichen Zeitperiode aussendet, wobei diese Perioden in zwei Gruppen A und B, die eine Sendefolge bilden, geteilt sind, Verfahren, nach dem in einem einzigen Empfangskanal der Erwerb und die Messung der von den Senderstationen der zwei Gruppen ausgesendeten Signale stattfindet, dadurch gekennzeichnet, dass man in dem Empfänger die spezifische Periode eine der zwei Gruppen erzeugt, die örtlich erzeugte Periode mit den empfangenen Signalen der spezifischen Periode synchronisiert, den Ort jedes zur Radio- Ortung verwendeten Signals von den Stationen der zwei Gruppen in der örtlich erzeugten Periode bestimmt, wobei der Erwerb und die Messung der Signale der Senderstationen der zweiten Gruppe im bei dem Erwerb und der Messung der Signale von der ersten Gruppe frei verfügbar gelassenen Zeitraum vorgenommen wird, und für die Radio-Ortung durch Messung der Empfangszeitdifferenz von zwei von Stationen zweier verschiedenen Gruppen ausgesendeten Signale die gemessene Zeitdifferenz durch den grössten gemeinsamen Teiler der Sendefolgen geteilt wird, die durch die zwei spezifischen Perioden der zwei Gruppen gebildet werden, und der Rest der Teilung als Wert zurückgehalten wird, der die zu ermittelnde geographische Position angibt.

2. Verfahren nach Anspruch 1, dadurch gekennzeichnet, dass zum Erwerb und zur Messung der Signale der zweiten Gruppe bei jedem Empfang der Vorderflanke des ersten Impulses der Hauptsenderimpulsserie der ersten Gruppe die Verzögerung des Empfangs des Signals vom Hauptsender der zweiten Gruppe gezählt wird und durch Zählung der geschätzte Ort des Hauptsenders der zweiten Gruppe in der örtlich im Empfänger erzeugten Folge und der Ort des Nebensignals der zweiten Gruppe ermittelt werden.

3. Verfahren nach Anspruch 2, dadurch gekennzeichnet, dass zur Ermittlung eines hyperbolischen Positionsortes ausgehend von den Signalen der zwei jeweils einer der zwei vorgenannten Gruppen angehörenden Signals begonnen wird, das Verfahren an einem geographischen Punkt anzuwenden, wo die Messung der Phasendifferenz zwischen den empfangenen Signalen der zwei Stationen höchstens annährend gleich der Hälfte der Zeit ist, die dem genannten grössten Teiler der zwei genannten Periode gleich ist.

4. Empfängerschaltung zur Radio- Ortung eines eine Empfängervorrichtung tragenden Fahrzeugs, durch Messung der Differenzen der Empfangszeiten der Hochfrequenzsignale, die von geographisch voneinander entfernt liegenden Senderstationen der zwei Stationsgruppen ausgesendet werden, wobei jede der genannten Gruppen eine einen Hauptsender bildende Sendestation und wenigstens eine einen Nebensender bildende und dem Hauptsender untergeordnete Station ist, wobei jede Station einer Gruppe eine Serie von elektrischen nahe beieinanderliegenden Impulsen, die zeitlich in vorbestimmter Weise von den von den anderen Stationen dieser Gruppe ausgesendeten Impulsserien versetzt ist, während einer vorbestimmten und für diese Gruppe spezifischen und von der Zeitperiode der anderen Gruppe verschiedenen Zeitperiode aussendet, wobei diese Perioden in zwei Gruppen A und B unterteilt sind, die eine Sendefolge bilden, wobei die Empfängervorrichtung einen einzigen Empfangskanal aufweist, der eine Vorrichtung zur Abnahme von Messdaten von den zu messenden Signalen, eine Vorrichtung zur Steuerung der Abnahme unter Wirkung einer Rechnereinheit, die geeignet ist zur Durchführung von Rechnungen ausgehend von den empfangenen Signalen, besitzt, dadurch gekennzeichnet, dass sie einen programmierbaren Zähler (8) zur Steuerung der Messwertabnahmevorrichtung (7), die als Probewertnahmeimpulsgenerator ausgeführt ist, besitzt, und dass die Rechnereinheit (5) programmiert ist, einerseits, um die Zählung der geschätzten Orte der zu messenden Signale, die von den Sendestationen der zwei ,unterschiedlichen Gruppen herkommen, durchzuführen und um den programmierbaren Zähler (8) zu steuern, indem dieser programmierbare Zähler dazu gebracht wird, ständig und nacheinander eine Zählzyklusfolge auszuführen, deren Dauer identisch ist mit der spezifischen Periode einer der Senderstationsgruppen, in Synkronismus mit dieser Periode, und während dieser Zyklusfolge an von der Rechnereinheit (5) bestimmten Zählungsorten während einer vorbestimmten Zeitdauer einen Zählungszyklus zum Erwerb eines Signals der zweiten Stationsgruppe, das erworben und zur Radio-Ortung verwendet werden soll, durchzuführen und, andererseits, um zur Bestimmung der Koordinaten der Radio-Ortung, ausgehend von den Signalen zweier jeweils einer der genannten Gruppen angehörenden Stationen, die Rechnereinheit (5) programmiert ist, um die Differenz der Empfangszeiten der zwei von den genannten verschiedenen Gruppen Gruppen herkommenden Signalen durch den grössten gemeinsamen Teiler der Sendefolgen zu teilen, die von den zwei spezifischen Perioden der zwei Gruppen gebildet werden, und den Rest dieser Teilung als Wert zurückzubehalten, der die zu ermittelnde geographische Position angibt.

5. Empfängervorrichtung gemäss dem Anspruch 4, dadurch gekennzeichnet, dass jede Dauer eines Erwerbszyklus einer vorbestimmten ganzen Zahl von Zählungsstellungen des programmierbaren Zählers (8) entspricht, sodass am Ende dieser Dauer des Erwerbszyklus der programmierbare Zähler sich in einer Zählungsposition befindet, die durch die genannte Periodenzählungsfolge definiert wird.

6. Empfängerschaltung nach Anspruch 5, dadurch gekennzeichnet, dass die Rechnereinheit (5) programmiert ist, um den programmierbaren Zähler (8) während einer Dauer eines Erwerbszählungszyklus zu laden oder zu erregen, damit dieser einen ersten Zyklus, dessen Dauer gleich dem Zeitraum zwischen der Ausgangszählungsposition der programmierbaren Zählers und dem geschätzten Empfangszeitpunkt des Signals ist, und einen Zyklus durchführt, dessen Dauer dem genannten Zeitraum komplementär ist, damit die Gesamtdauer der Erwerbszeit der vorgenannten ganzen Zahl von Positionen des programmierbaren Zählers gleich ist.

7. Empfängervorrichtung nach Anspruch 6, dadurch gekennzeichnet, dass zum Erwerb und zur Messung von Signalen, die von Senderstationen einer anderen Stationsgruppe kommen, deren Periode von derjenigen der ersten Gruppe unterschiedlich ist, die Rechnereinheit (5) programmiert ist, um in der für die erste Gruppe ermittelten Folge die geschätzte Position, die dem Empfang eines zu erwerbenen und zu messenden Signals der zweiten Gruppe entspricht, zu bestimmen und um zweimal in definierter Weise den Zyklus des programmierbaren Zählers (8) in Funktion von der geschätzten Position in der vorgenannten Weise zu verändern, damit dieser diese Folgenzählzyklen in einer von der Rechnereinheit definierbaren Position wieder aufnimmt, wobei die zeitliche Versetzung der Signale der Hauptsender der zwei Gruppen, die durch die unterschiedlichen Zeitdauern der zwei Perioden verursacht wird, berücksichtigt wird.

8. Empfängervorrichtung nach einem der Ansprüche 4 bis 7, dadurch gekennzeichnet, dass sie ferner abwärts von einem selektiven Eingangsempfänger (2) einen Analog-Digital- Umsetzer (3) besitzt, auf den die Probenahmegeneratorvorrichtung (7) einwirkt und der mit einem Messwertspeicher verbunden ist, der mit der Rechnereinheit (5) dialogieren kann.

9. Empfängervorrichtung nach einem der Ansprüche 4 bis 8, dadurch gekennzeichnet, dass sie eine Anzeige-und Tastaturvorrichtung (11) besitzt, die es einem Benutzer erlaubt, die Periode oder die Perioden der Senderstationen und die Nebensender, die durch ihre Verzögerung gegenüber den Hauptsendern definiert sind, abgerundet in ihrer Periode und eine geschätzte geographische Position einzuschreiben.
